# EUROPEAN PATENT APPLICATION

(11) **EP 4 427 597 A1**
(43) Date of publication of application: **11.09.2024**
(21) Application number: 24161213.4
(22) Date of filing: 04.03.2024
(51) Int. Cl.: A22C 11/00

(54) **AN APPARATUS FOR REMOVING AN OUTER COVERING FROM FOOD PRODUCTS AND THE LIKE**

(30) Priority: 06.03.2023 IT 202300003969
(71) Applicant: Assenza, Alessandro, 48018 Faenza (RA) (IT)
(72) Inventor: Assenza, Alessandro, 48018 Faenza (RA) (IT)
(74) Representative: Modiano, Micaela Nadia

(57) **Abstract**

An apparatus (1) for removing an outer covering (A) from food products (P) and the like, which comprises: at least one conveyance line (2) provided with concave seats (3), each one configured to accommodate a respective product (P), such line (2) being defined between a station for feeding products (P) to be processed, located upstream, and a station for unloading products (P) stripped of the covering layer (A), located downstream; at least one cutting station (4), downstream of the feeding station, which is configured for the removal of a protruding end (B) of the covering layer (A) from a product (P) arranged in the seat (3) aligned with the cutting station; at least one surface incision station (5), downstream of the cutting station (4), which is configured to perform at least one incision of the covering layer (A) of a terminal portion of a product (P) arranged in the seat (3) aligned with the surface incision station, such incision extending to the cut edges of the end (B) removed previously; at least one station (6) for detaching the covering layer (A), downstream of the incision station (5), which comprises toothed grip means (7) configured for abutment against the terminal portion of the product (P), with consequent piercing of the layer (A), by teeth (8) of the toothed grip means (7), and for a subsequent combined rotation and translation, with consequent rolling-up of a flap of the covering layer (A) onto a head of the toothed grip means (7) which is provided with teeth (8) and removal thereof from the outer surface of the product (P); at least one station (9) for separating the product (P) from the covering layer (A), which comprises at least one movement element (10, 11) configured to translate the product (P) beyond the toothed grip means (7), with consequent complete removal of the covering layer (A) which has at least one flap coupled to the toothed grip means (7).

## Description

The present invention relates to an apparatus for removing an outer covering from food products and the like.

In particular the apparatus according to the invention will be specifically indicated for removing the outer covering layer (constituted by natural or artificial casing, by fabric, polymeric film, paper sheets, sheets impregnated with wax, paraffin and the like, and combinations thereof) from meat-based products stuffed into a casing (such as sausages, cold meats and the like), from aged cheeses, from semi-finished products of the processed food industry (such as dried food products, smoked food products, dehydrated food products and the like).

Generally, the apparatus according to the invention can also be used for removing covering layers from different products: for example the apparatus according to the invention could be used for removing protective films from products in the fashion sector, technological products, and furnishings (in this case the protective films are generally present on the raw materials and need to be removed only when the product is finished).

Conventional devices generally have great longitudinal space occupation, since the operations involved need to be performed in sequence along an advancement line of the products. This means it is impossible to install these devices in small businesses (for example an artisan's premises that treats food products).

The use is known of more compact machines, by virtue of which it is possible to remove the covering from specific products, but these are less versatile, requiring complex operations to change the format of the product to be processed.

Furthermore, the more compact conventional machines are not generally adapted to automatic or semiautomatic operation along a specific production line.

In order to ensure that the products are appropriately processed, it is in fact necessary the presence of an operator to perform some steps: this increases the running costs of the device.

The aim of the present invention is to solve the above-mentioned drawbacks by providing an apparatus for removing an outer covering from food products and the like which offers reduced space occupation and which therefore can be installed in small spaces, such as artisans' premises and the like.

Within this aim, an object of the invention is to provide an apparatus for removing an outer covering from food products and the like which is particularly versatile and suitable for processing products of dimensions that can vary widely.

Another object of the invention is to provide an apparatus for removing an outer covering from food products and the like which entails simple operations to change format.

Another object of the invention is to provide an apparatus for removing an outer covering from food products and the like, which can be of the automatic and semiautomatic type.

Another object of the invention is to provide an apparatus for removing an outer covering from food products and the like which requires minimum operator intervention during its operation.

Another object of the present invention is to provide an apparatus for removing an outer covering from food products and the like which is of low cost, easily and practically implemented and safe in use.

This aim and these and other objects that will become more apparent hererinafter are achieved by an apparatus for removing an outer covering from food products and the like, characterized in that it comprises:
- at least one conveyance line provided with concave seats, each one configured to accommodate a respective product, said line being defined between a station for feeding products to be processed, located upstream, and a station for unloading products stripped of the covering layer, located downstream;
- at least one cutting station, downstream of said feeding station, which is configured for the removal of a protruding end of said covering layer from a product arranged in the seat aligned with that station;
- at least one surface incision station, downstream of said cutting station, which is configured to perform at least one incision of the covering layer of a terminal portion of a product arranged in the seat aligned with that station, said incision extending to the cut edges of the end removed previously;
- at least one station for detaching the covering layer, downstream of said incision station, which comprises toothed grip means configured for abutment against said terminal portion of said product, with consequent piercing of said layer, by said teeth of said means, and for a subsequent combined rotation and translation, with consequent rolling-up of a flap of said covering layer onto a head of said means which is provided with said teeth and removal thereof from the outer surface of said product;
- at least one station for separating said product from said covering layer, which comprises at least one movement element configured to translate said product beyond said toothed grip means, with consequent complete removal of said covering layer which has at least one flap coupled to said grip means.

Further characteristics and advantages of the invention will become better apparent from the detailed description that follows of a preferred, but not exclusive, embodiment of the apparatus for removing an outer covering from food products and the like, which is illustrated by way of non-limiting example in the accompanying drawings wherein:
Figure 1 is a schematic view from above of a possible embodiment of an apparatus for removing an outer covering from food products and the like according to the invention in a first operating configuration;
Figure 2 is a schematic view from above of the apparatus of Figure 1 in a second operating configuration;
Figure 3 is a schematic view from above of the apparatus of Figure 1 in a third operating configuration;
Figure 4 is a schematic view from above of the apparatus of Figure 1 in a fourth operating configuration;
Figure 5 is a schematic view from above of the apparatus of Figure 1 in a fifth operating configuration;
Figure 6 is a schematic view from above of the apparatus of Figure 1 in a sixth operating configuration;
Figure 7 is a schematic view from above of the apparatus of Figure 1 in a seventh operating configuration;
Figure 8 is a schematic view from above of the apparatus of Figure 1 in an eighth operating configuration;

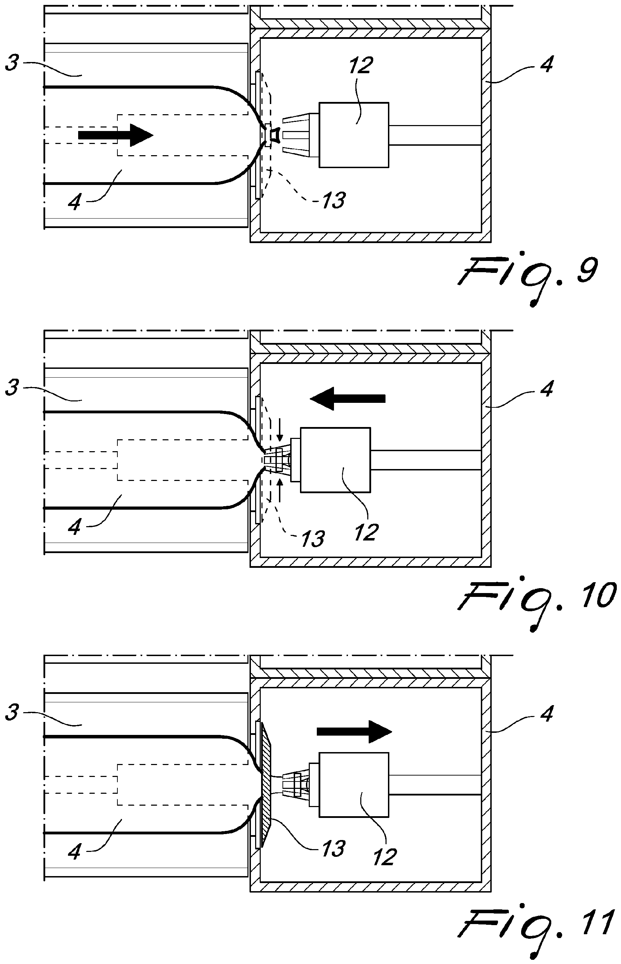

Figure 9 is a schematic side view of a first step performed by the apparatus of Figure 1 when it is in the second operating configuration;
Figure 10 is a schematic side view of a second step performed by the apparatus of Figure 1 when it is in the second operating configuration;
Figure 11 is a schematic side view of a third step performed by the apparatus of Figure 1 when it is in the second operating configuration;

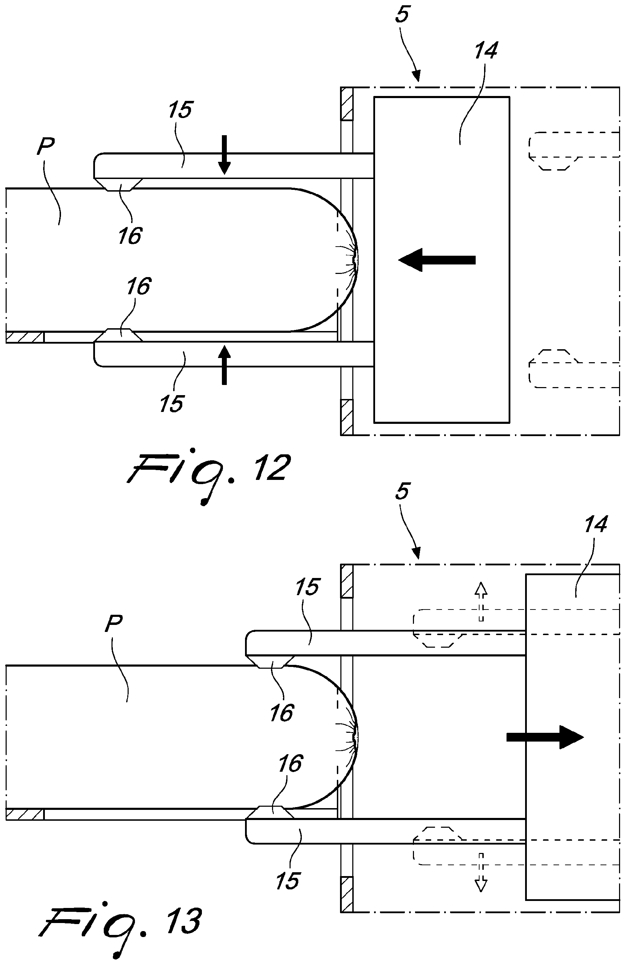

Figure 12 is a schematic side view of a first maneuver performed by the apparatus of Figure 1 when it is in the fourth operating configuration;
Figure 13 is a schematic side view of a second maneuver performed by the apparatus of Figure 1 when it is in the fourth operating configuration;

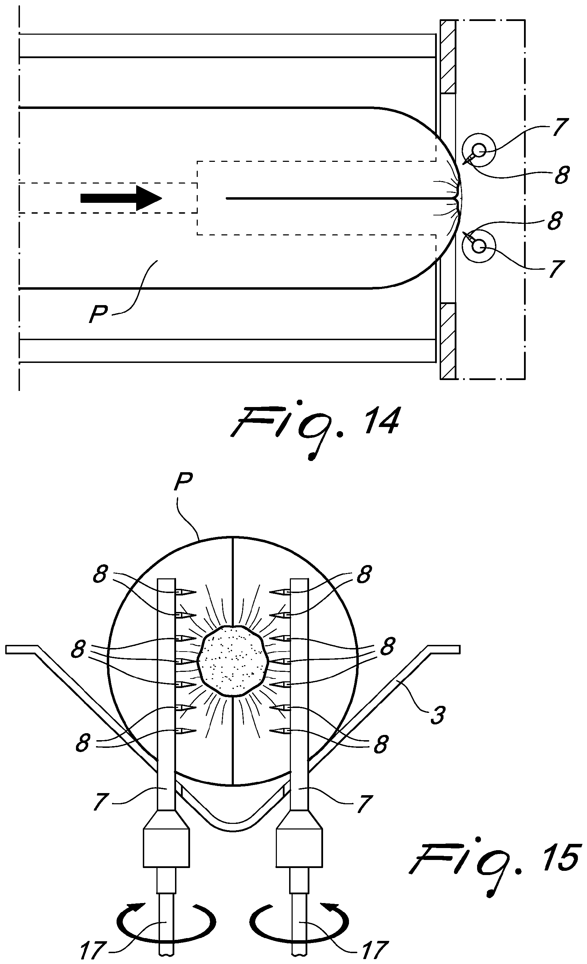

Figure 14 is an enlarged schematic view from above of a first action performed by the apparatus of Figure 1 when it is in the seventh operating configuration;
Figure 15 is a schematic front elevation view of a second action performed by the apparatus of Figure 1 when it is in the seventh operating configuration;

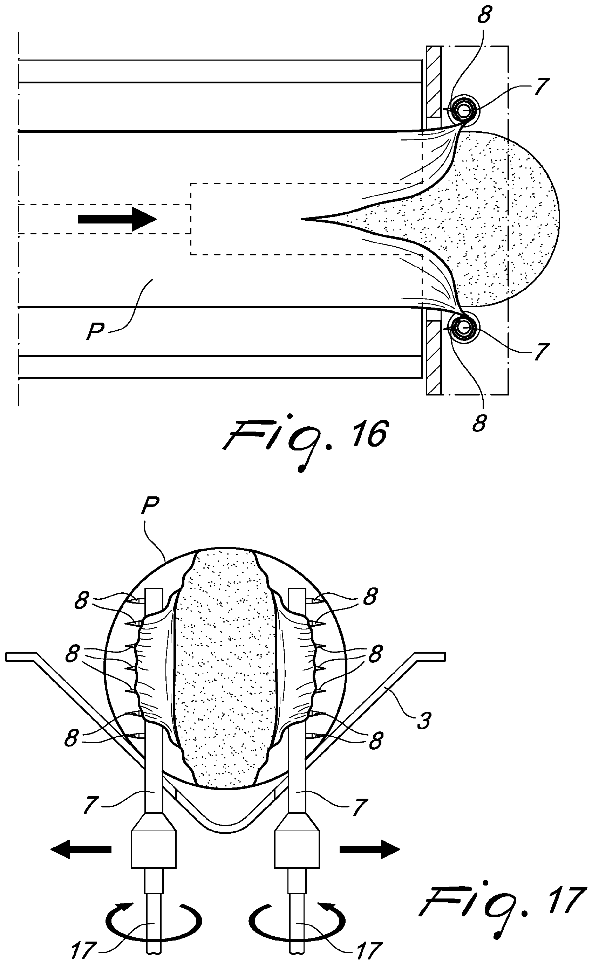

Figure 16 is an enlarged schematic view from above of a third action performed by the apparatus of Figure 1 when it is in the seventh operating configuration;
Figure 17 is a schematic front elevation view of a fourth action performed by the apparatus of Figure 1 when it is in the seventh operating configuration.

With reference to the figures, the reference numeral 1 generally designates an apparatus for removing an outer covering from food products P and the like.

The apparatus 1 according to the invention comprises at least one conveyance line 2 which is provided with concave seats 3, each of which is configured to accommodate a respective product P.

In particular the concave seats 3 can have a cross-section with a curved outline (for example like a circumferential or elliptical portion or with an irregularly curved outline) or with a "V" shape (the inclination between the two walls will depend on the specific operating requirements) or an outline made up of a combination of straight segments and curved segments (so as to better adapt to the specific requirements, to the shape and to the dimensions of the product P to be processed).

It should further be noted that the line 2 will be defined between a station for feeding the product to be processed, located upstream of the apparatus 1, and a station for unloading the products P stripped of the covering layer A, located downstream of the apparatus 1.

The apparatus 1 further comprises advantageously at least one cutting station 4, downstream of the feeding station, which is configured for the removal of a protruding end B of the covering layer A from a product P arranged in the seat 3 aligned with that station.

The apparatus 1 is furthermore conveniently provided with at least one surface incision station 5, which is located downstream of the cutting station 4 and is configured to perform at least one incision of the covering layer A of a terminal portion of a product P arranged in the seat 3 aligned with that station. This incision will be such as to extend to the cut edges of the end B that was removed previously.

In this manner the covering layer A will be open on the end face of the product P and cut in a longitudinal direction starting from that end face for a portion of predefined length.

The apparatus 1 furthermore profitably will be provided with at least one station 6 designed to remove the covering layer A. Such station 6 will be located downstream of the incision station 5 and profitably will comprise toothed grip means 7 configured for abutment against the terminal portion of the product P, with consequent piercing of the layer A, by the teeth 8 of the means 7.

The means 7 can also perform a combined rotation and translation, with consequent rolling-up of a flap of the covering layer A onto a head of the means which is provided with teeth 8 (during the rotation of the means 7) and removal of this flap from the outer surface of the product P (during a translation of the means 7 which moves them away from each other along a direction that is at least partially perpendicular to the longitudinal axis of the product P).

The apparatus 1 according to the invention finally positively comprises at least one station 9 for separating the product P from the covering layer A: such station 9 comprises at least one movement element 10, 11 configured to translate the product P beyond the toothed grip means 7, with consequent complete removal of the covering layer A which has at least one flap coupled to the grip means 7.

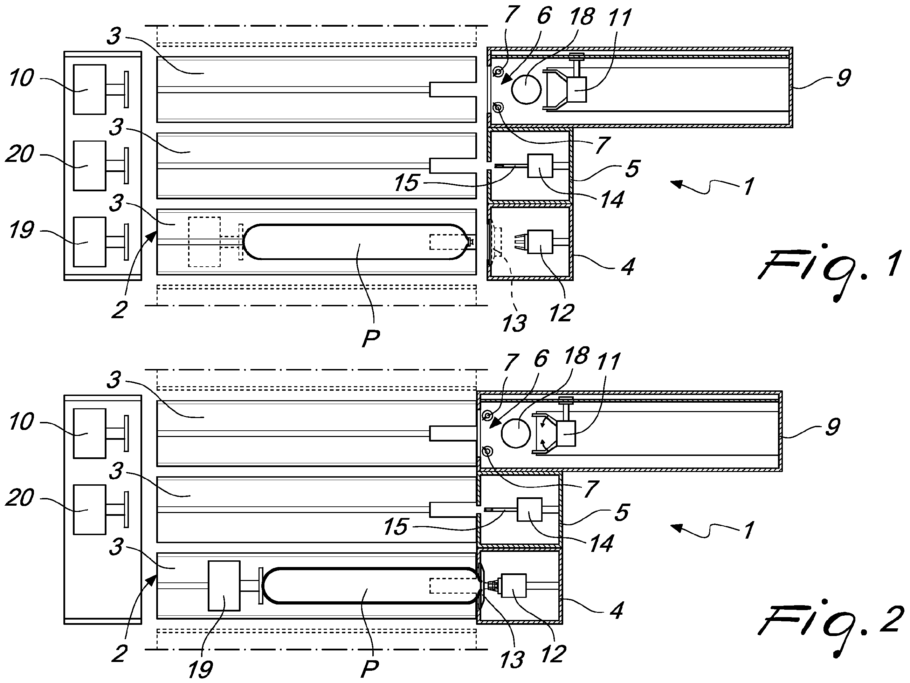

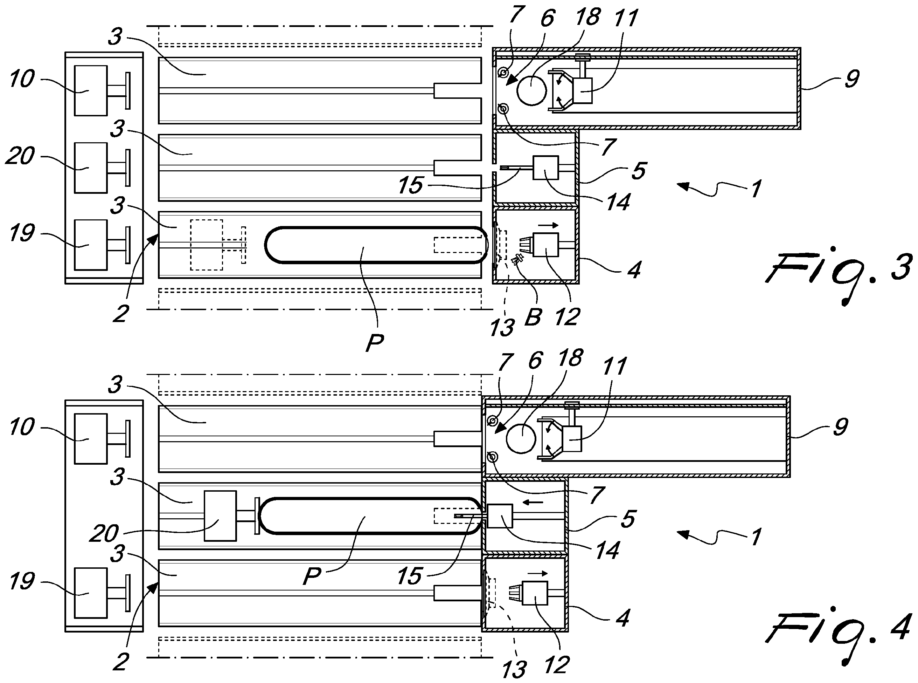

The sequence of operations with which it is possible to remove the covering layer A from the product P using the apparatus 1 is shown schematically in the accompanying Figures 1 to 8: the product P, after it has been placed in a respective seat 3 of the conveyance line 2 (as shown by way of non-limiting example in the accompanying Figure 1), is handled by the first station 4, in which the end B of the product P (specifically, of the covering layer A) will be removed in a manner that will be explained in detail below (as shown by way of non-limiting example in the accompanying Figures 2 and 3).

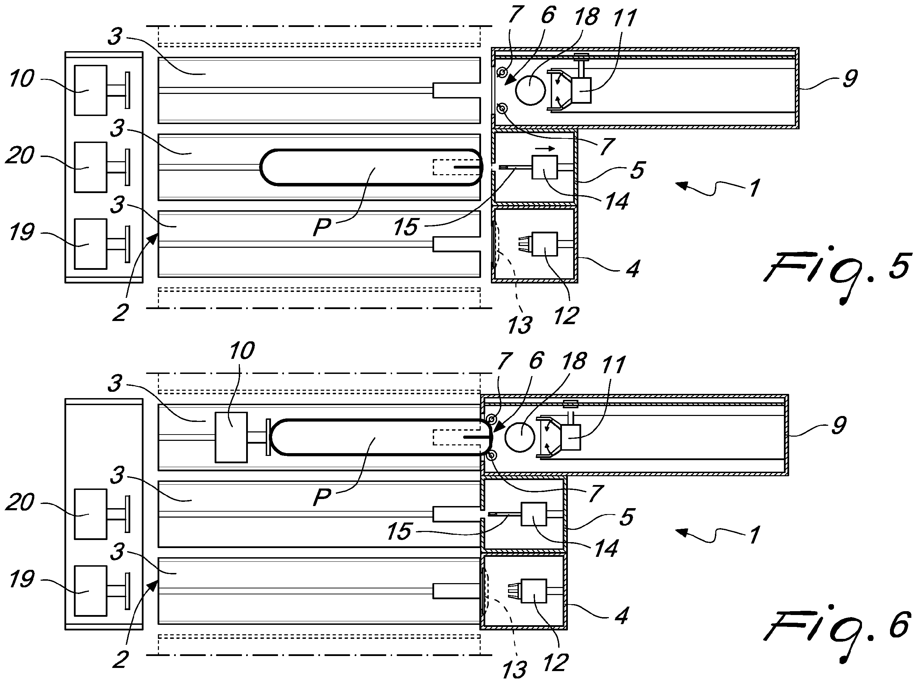

At this point the product will be ready to be transferred (using the line 2) in alignment with the incision station 5 (as shown by way of non-limiting example in the accompanying Figure 4), in which incisions of the layer A will be performed along a terminal portion of predefined length of the product P, performing such incisions till the edges of the end B that was removed previously (as shown by way of non-limiting example in the accompanying Figure 5).

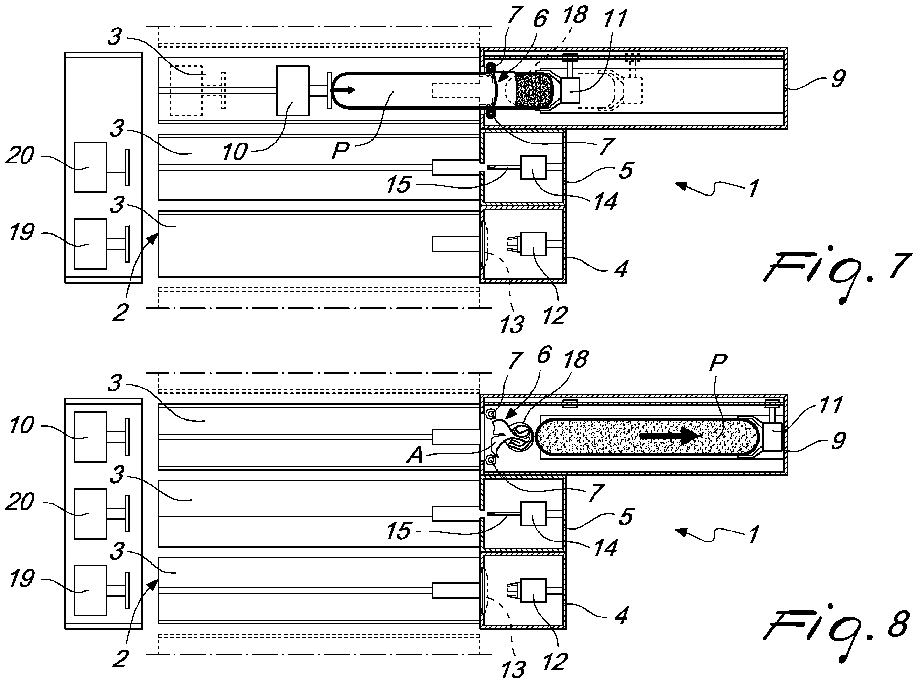

The product P will then be transferred in alignment with the station 6 designed to remove the covering layer A (as shown by way of non-limiting example in the accompanying Figure 6): the means 7 will abut against the front of the product P, sinking the teeth 8 into the end flaps of the layer A, and begin the operations to remove such flaps through the rotation and mutual spacing apart, in a direction at least partially perpendicular to the axis of the product P, of the means 7 (as shown by way of non-limiting example in the accompanying Figure 7).

At this point, using the station 9 for separating the product P from the covering layer A, the movement element 10, 11 will be used to translate the product P beyond the toothed grip means 7, with consequent complete removal of the covering layer A which has at least one flap coupled to the grip means 7 (as shown by way of non-limiting example in the accompanying Figure 8).

With reference to an embodiment of undoubted practical and applicative interest, it should be noted that the cutting station 4 can advantageously comprise at least one grip unit 12 and at least one cutter 13 which can move in a transverse direction with respect to the longitudinal axis of the product P, in order to remove the protruding end B of the covering layer A, while the apex of that covering layer A is clamped and pulled by the grip unit 12.

It should be noted that the grip unit 12 can usefully be of a type preferably chosen from a jaw, a spindle, a vice and the like.

The choice to adopt a grip unit 12 shaped like a spindle may offer advantages in all cases where the end B has its apex incorrectly aligned with the longitudinal axis of the product P, but axially offset or skewed with respect to it. In these cases in fact, by executing a progressive clamping of the spindle (so that its claws slide on the outer surface of the product P, in so doing catching the apex even if it is axially offset or skewed) it is possible to ensure a correct clamping of the apex.

It should also be noted that the at least one movable cutter 13 can profitably be of the type of a guillotine, so as to cut off the end B by following a straight stroke in a direction substantially transverse with respect to the longitudinal axis of the product P.

The cutting station 4 can be supported by a respective actuator which makes it possible to translate it (for a travel of adjustable extent) in order to move it closer to/away from the line 2 in a direction substantially parallel to the longitudinal axis of the product P.

In this manner it will be possible to move the station 4 closer to the line 2 when it is necessary to execute the cut (so as to enable the grip unit 12 to correctly take hold of the protruding apex of the covering layer B) and away from the line as soon as the end B has been removed, so as to facilitate the transfer of the seat 3 containing the product P to the subsequent incision station 5.

The at least one surface incision station 5 comprises a supporting carriage 14 for a pair of arms 15 which can move along a stroke of mutual approach/spacing apart of their ends, each one of such ends supporting a respective blade 16.

The carriage 14 will be positively movable between a first configuration of alignment of the blades 16 with a predefined position of the lateral surface of the product P, upstream of the portion of product on which it is necessary to execute the surface incision cut (chosen by the operator as a function of the characteristics of the product P), and a configuration in which the blades 16 are located outside the outline of the product P.

During the translation of the carriage 14 between the first and second configurations, the arms 15 will be actuated according to a stroke of mutual approach which corresponds to the complete incision of the covering layer A by each blade 16 along all of the portion of interest of each product P.

The mutual approach of the blades 16 is necessary in order to ensure that the incision is correctly executed on the covering layer A on products P that have a tapered shape as well: in fact bringing the blades 16 together enables them to follow the shape of a product P that becomes progressively thinner toward its front.

It should furthermore be noted that in addition to what is described above for the cutting station 4, between the incision station 5 and the frame of the apparatus 1 movement units can be also arranged for the translation of the station with consequent advancement/retraction, according to a predefined stroke, substantially along the longitudinal direction of the product P accommodated in a respective seat 3 of the conveyance line 2.

In this manner it will be possible to move the station 5 closer to the line 2 when it is necessary to execute the incisions on the layer A (so as to enable the blades 2 to reach the predefined position, upstream of a specific portion of product P, at which they are to move closer together in order to begin the incision, which will then proceed toward the front of the product P by virtue of the travel allowed by the carriage 14) and move the station away from the line as soon as the incision has been completed, so as to facilitate the transfer of the seat 3 containing such product P to the subsequent station 6.

The toothed grip means 7, configured to abut against the terminal portion of the product P, will advantageously comprise at least one slider which can translate along a guide according to a preset stroke.

By virtue of the presence of this slider, the toothed grip means 7 can be moved toward/away from each other in a motion that will also correspond to a movement toward/away from the longitudinal axis of the product P aligned with the means, during the operations to remove the flaps of the covering layer A from the product P.

At least one motor, arranged on this slider, will have its shaft integral with a stem 17 provided with teeth 8 which protrude in a radial direction.

When the teeth 8 are sunk into the covering layer A of a product P, the rotation of the stem 17, by way of the action of the respective motor, results in the rolling of a flap of the layer A onto an end portion of the stem 17 (substantially the portion where the teeth 8 are located and the respective adjacent regions).

At this point, the movement of the slider along the respective guide will result in the movement of the stem 17 toward/away from the outer surface of the product P.

Moving the stems 17 away from each other (and from the axis of the product P) while the flap of the covering layer A is being rolled onto the end portion of the stems results in the removal of a part of the covering layer A from the product P (at the terminal portion along which the incisions were made previously).

In particular it should be noted that the sliders profitably can be two in number, arranged along symmetrically mutually opposite guides, each guide provided with a respective motor with its shaft coupled to a respective stem 17 provided with teeth 8 in its end portion: in this embodiment the motors will be contra-rotating, so that each stem 17 is capable of rolling up the respective flap of covering layer A, thus forcing its removal from the surface of the product P.

Each motor will rotate so that the flap of covering layer A is rolled up onto the end portion of the stem 17 while always keeping the face of such layer A that was previously adhering to (resting on and integral with) the outer surface of the product P facing outward.

It should further be noted that the movement element 10, 11 configured for the translation of the product P beyond the toothed grip means 7 will comprise, in substantial alignment with the station 6 for detaching the covering layer A, at least one pusher 10 configured to abut against the end of the product P that is opposite to the portion on which the surface incision has been made and to apply a force to it in a longitudinal direction in order to cause its translation. This translation will result in the product P passing through the station 6, with consequent removal of the layer A.

Conveniently the movement element 10, 11 also comprises a traction gripper 11, arranged opposite to the pusher 10, which will be designed to clamp part of the terminal portion of the product P already stripped of the covering layer A and pull it according to a predefined stroke.

In many cases in fact the pusher 10 cannot accompany the product P until it has completely passed through the station 6 (as the pusher 10 would then interfere with some components of the station 6): by virtue of the presence of the traction gripper 11, the product P can therefore be gripped and subjected to a traction for the complete removal of the covering layer A.

A disposal opening 18 is provided through which the covering layer A removed from a predefined product P can be disposed of by the apparatus 1: in order to facilitate the disposal, the opening 18 can be aided by a suction pump which will ensure that the layer is sucked into the opening 18 (in this step the stems will perform a retrograde rotation in order to unroll the respective flap of covering layer A from the stem 17, in so doing releasing it into the opening 18).

It should be noted that the correct positioning of the product P in the respective seat 3 during the operations to cut the end B will be ensured by the presence of a pusher 19 which will force the product P toward the station 4.

Similarly, the correct positioning of the product P in the respective seat 3 during the incision operations on the covering layer A of the predefined terminal portion of the product P will be ensured by a pusher 20 which will force the product P toward the station 5.

In order to facilitate rapid operations to change format, the movement of advancement and retraction of the stations 4 and 5, and also the travel of the pushers 10, 19, 20 and of the traction gripper 11, will be automatically adjustable within strokes of extent that is such as to comprise a wide range of products P.

The station for feeding the products P to be processed, located upstream of the apparatus 1, can have manual loading or automatic loading of the products P in the seats 3 of the line 2. For automatic loading, vision apparatuses (video cameras, still cameras, optical sensors) will be provided which detect the correct removal of the end B in the station 4. If this end B has not been correctly removed, the sensors will report an anomaly which, by means of alarm signals, will alert an operator who will interrupt operation of the apparatus 1 and will manually force a repetition of the operation to remove the end B.

The station for unloading the products P that are stripped of the covering layer A, located downstream of the apparatus 1, can also have respective automatic mechanisms for picking up individual products P and sending them to subsequent operating steps or to specific storage areas or the like (according to application requirements).

Advantageously the present invention solves the above-mentioned problems, by providing an apparatus 1 for removing an outer covering A from food products P and the like which offers reduced space occupation and which therefore can be installed in small spaces, such as artisans' premises and the like. In fact the four stations 4, 5, 6 and 9 are arranged close to each other and the product passes from one to the next by means of the movement line 2 performing short strokes. This compact nature of the apparatus 1 is particularly evident both in the longitudinal direction and in the transverse direction.

Conveniently the apparatus 1 according to the invention is particularly versatile and adapted to process products P of dimensions that can vary widely, by virtue of the capacity to adjust, within predefined ranges, the stroke of advancement and retraction of the stations 4 and 5, the stroke of the pushers 10, 19 and 20 and the stroke of the clamp 11. The seats 3 will be shaped so as to be capable of accommodating products P of various shapes and of various diameters, just as the cutter 13 will be designed to be capable of effectively performing the resection of ends B of different shapes and dimensions. The ability to adjust the longitudinal travel of the carriage 14 and the mutual distance between the blades 16 also makes it possible to adapt the incision station 5 to the specific characteristics of the products on which to operate.

Advantageously the apparatus 1 according to the invention entails simple operations to change format: it is possible in fact to have all the servomechanisms dedicated to moving the various components of the apparatus controlled by a single processor running a computer program that can identify the ideal strokes of each component as a function of the dimensions and characteristics of the product P to be processed, which can be entered by the user.

Advantageously the apparatus 1 according to the invention can operate both automatically (associated with an automatic loader for supplying products P to the conveyance line 2 and with specific systems for picking up the products P stripped of the covering layer A from the station 9) and semi-automatically (in which an operator performs some of the operations, chosen from loading the products P or extracting the products P stripped of the covering layer A).

Positively the apparatus 1 according to the invention requires the minimum of intervention from operators during its operation, by virtue of the fact that the various components are designed to be capable of automatically handling substantially all the operating steps after the loading of the products P.

Positively the apparatus 1 according to the invention is easily and practically implemented and is of low cost: such characteristics make the apparatus 1 according to the invention an innovation that is safe in use.

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102023000003969 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for removing an outer covering (A) from food products (P) and the like, **characterized in that** it comprises:
- at least one conveyance line (2) provided with concave seats (3), each one configured to accommodate a respective product (P), said line (2) being defined between a station for feeding products (P) to be processed, located upstream, and a station for unloading products (P) stripped of the covering layer (A), located downstream;
- at least one cutting station (4), downstream of said feeding station, which is configured for the removal of a protruding end (B) of said covering layer (A) from a product (P) arranged in the seat (3) aligned with the cutting station;
- at least one surface incision station (5), downstream of said cutting station (4), which is configured to perform at least one incision of the covering layer (A) of a terminal portion of a product (P) arranged in the seat (3) aligned with the surface incision station, said incision extending to the cut edges of the end (B) removed previously;
- at least one station (6) for detaching the covering layer (A), downstream of said incision station (5), which comprises toothed grip means (7) configured for abutment against said terminal portion of said product (P), with consequent piercing of said layer (A), by teeth (8) of said toothed grip means (7), and for a subsequent combined rotation and translation, with consequent rolling-up of a flap of said covering layer (A) onto a head of said toothed grip means (7) which is provided with said teeth (8) and removal thereof from the outer surface of said product (P);
- at least one station (9) for separating said product (P) from said covering layer (A), which comprises at least one movement element (10, 11) configured to translate said product (P) beyond said toothed grip means (7), with consequent complete removal of said covering layer (A) which has at least one flap coupled to said toothed grip means (7).

2. The apparatus according to claim 1, **characterized in that** said cutting station (4) comprises at least one grip unit (12) and at least one cutter (13) which can move in a transverse direction with respect to the longitudinal axis of the product (P) to remove a protruding end (B) of said covering layer (A) the apex of which is clamped and pulled by said grip unit (12).

3. The apparatus according to the preceding claim, **characterized in that** said grip unit (12) is of a type preferably chosen from a jaw, a spindle, a vice and the like.

4. The apparatus according to claim 2, **characterized in that** said at least one movable cutter (13) is of the type of a guillotine.

5. The apparatus according to one or more of the preceding claims, **characterized in that** said at least one surface incision station (5) comprises a supporting carriage (14) for a pair of arms (15) which can move along a stroke of mutual approach/spacing apart of the ends of said arms, each one of said ends supporting a respective blade (16), said carriage (14) being movable between a first configuration of alignment of said blades (16) with a predefined position of the lateral surface of said product (P), upstream of said portion, and a configuration in which said blades (16) are located outside the outline of said product (P), during the translation of said carriage (14) between the first and second configurations, said arms (15) being actuated according to a stroke of mutual approach which corresponds to the complete incision of the covering layer (A) by each blade (16) across all of said portion of said product (P).

6. The apparatus according to one or more of the preceding claims, **characterized in that**, interposed between at least one component selected from said cutting station (4) and said incision station (5) and the frame of said apparatus (1), there are movement units for the translation of said component with consequent advancement/retraction, according to a predefined stroke, substantially along the longitudinal direction of said product (P) accommodated in a respective seat (3) of said conveyance line (2).

7. The apparatus according to one or more of the preceding claims, **characterized in that** said toothed grip means (7) configured for abutment against said terminal portion of said product (P) comprise at least one slider which can translate along a guide according to a predefined stroke, at least one motor, arranged on said slider, having its respective shaft integral with a stem (17) provided with teeth (8) which protrude in a radial direction, when said teeth (8) are sunk into said covering layer (A) of a product (P) the rotation of said stem (17), by virtue of the action of said motor, causes the respective flap of said layer (A) to be rolled up onto an end portion of said stem (17), the movement of said slider along said guide causing said stem (17) to move toward/away from the outer surface of said product (P).

8. The apparatus according to claim 7, **characterized in that** said sliders are two in number, arranged along symmetrically mutually opposite guides, each one provided with a respective motor the shaft of which is coupled to a respective toothed stem (17), said motors being contra-rotating.

9. The apparatus according to one or more of the preceding claims, **characterized in that** said movement element (10, 11) configured for the translation of said product (P) beyond said toothed grip means (7) comprises, in substantial alignment with said station (6) for detaching the covering layer (A), at least one pusher (10) configured to abut against the end of said product (P) that is opposite to said portion and to apply a force to it in a longitudinal direction in order to cause its translation.

10. The apparatus according to one or more of the preceding claims, **characterized in that** said movement element (10, 11) comprises a traction gripper (11), arranged opposite to said pusher (10), for clamping part of the terminal portion of said product (P) already stripped of said covering layer (A) and pulling it according to a predefined stroke.
